# EUROPÄISCHE PATENTSCHRIFT

(11) **EP 4 605 197 B1**
(45) Veröffentlichungstag und Bekanntmachung des Hinweises auf die Patenterteilung: **02.09.2026**
(21) Anmeldenummer: 22805850.9
(22) Anmeldetag: 20.10.2022
(51) Int. Cl.: B28B 1/00, B01F 25/313, B01F 25/4314, B01F 25/433, B01F 27/50, B28C 5/02, B28C 5/08, B28C 5/12, B28C 5/16, B29C 64/106, B29C 64/209, B29C 64/314, B29C 64/321, B33Y 30/00, B33Y 10/00, E04G 21/04

(54) **3D-BETONDRUCKKOPF**
3D CONCRETE PRINTHEAD
TÊTE D'IMPRESSION 3D POUR BÉTON

(43) Veröffentlichungstag der Anmeldung: 27.08.2025
(73) Patentinhaber: MAI International GmbH, 9710 Feistritz/Drau (AT)
(72) Erfinder: PAPOUSEK, Hannes, 9523 Landskron (AT); KAMPITSCH, David, 9711 Paternion (AT); RUITINGA, Volker Emil, 5644GB Eindhoven (NL); KAMPITSCH, Klaus, 9701 Kamering (AT); SEPPELE, Marc, 9710 Feistritz/Drau (AT); DIDL, Manuel, 9710 Feistritz/Drau (AT); ALTERSBERGER, Sebastian, 9530 Bad Bleiberg (AT)
(74) Vertreter: Schott, Jakob Valentin
(86) Internationale Anmeldenummer: PCT/EP2022/079257
(87) Internationale Veröffentlichungsnummer: WO 2024/083337

(56) Entgegenhaltungen:
- CN-U- 208 133 209
- CN-U- 208 133 209
- DE-A1- 102012 214 519
- DE-A1- 102012 214 519
- DE-A1- 102020 003 760
- DE-A1- 102020 003 760
- ES-U- 1 288 071

## Beschreibung

Die vorliegende Erfindung betrifft einen 3D-Betondruckkopf für Zwei- oder Mehrkomponentenmaterialien. Bei den Materialien, die mit einem solchen 3D-Betondruckkopf verarbeitet werden können, kann es sich um Beton, Mörtel oder Geopolymere sowie Mischungen aus diesen Materialien handeln. Beispielsweise können werksseitig vorgemischte Trockenmörtel zum Einsatz kommen, welche auch Geopolymere enthalten können. Der im Rahmen dieser Beschreibung verwendete Ausdruck "3D-Betondruckkopf" ist deshalb nicht so zu verstehen, dass damit ausschließlich Beton verarbeitet werden kann. Vielmehr ist dieser Ausdruck so zu verstehen, dass er eine Verarbeitung der vorgenannten Materialien einschließt.

Ein 3D-Betondruckkopf muss eine kontinuierliche Abgabe eines intensiv durchmischten Zwei- oder Mehrkomponentenmaterials ermöglichen, um gleichbleibende Materialeigenschaften des vom 3D-Betondruckkopf abgegebenen Materials sicherzustellen. Andernfalls würde die Gefahr bestehen, dass ein im 3D-Betondruckverfahren hergestelltes Bauteil in zufälliger Weise ortsabhängig unterschiedliche Materialeigenschaften aufweist. Ferner soll ein 3D-Betondruckkopf möglichst kompakt und leicht sein, um mittels beispielsweise eines Roboterarms schnell und präzise bewegbar und insbesondere auch verschwenkbar zu sein.

Um gewünschte Eigenschaften des von einem 3D-Betondruckkopf abgegebenen Materials zu erreichen, wird dem die Materialgrundlage bildenden Beton oder Mörtel oder dergleichen üblicherweise ein Zusatzstoff zugesetzt. In Abhängigkeit der gewünschten Materialeigenschaften können auch mehrere Zusatzstoffe zum Einsatz kommen. Solche Zusatzstoffe sind beispielsweise Aushärtungsbeschleuniger oder -verzögerer, Farbpigmente und/oder Stoffe, welche die rheologischen Eigenschaften des zu verarbeitenden Materials beeinflussen. Solche Stoffe können sogenannte Plastifizierer sein, welche die Thixotropie des zu verarbeitenden Materials ändern, oder Fließmittel, welche eine zu verarbeitende Materialmischung fließfähiger machen.

Unabhängig von der genauen Art des oder der eingesetzten Zusatzstoffe kommt es bei einem 3D-Betondruckkopf darauf an, den oder die Zusatzstoffe innig mit dem die Materialgrundlage bildenden Beton, Mörtel oder dergleichen zu vermischen, bevor das gesamte Material vom 3D-Betondruckkopf ausgegeben wird. Aus der DE 10 2020 003 760 A1 ist ein 3D-Betondruckkopf bekannt, bei dem eine innige Vermischung des Beton- oder Mörtelgrundmaterials mit zum Einsatz kommenden Zusatzstoffen in der Mischkammer des 3D-Betondruckkopfes dadurch sichergestellt werden soll, dass das Beton- oder Mörtelgrundmaterial und ein Zusatzstoff oder mehrere Zusatzstoffe gleichzeitig aber getrennt voneinander durch eine gemeinsame Öffnung in einer Umfangswand der Mischkammer in die Mischkammer eingeleitet werden. Auf diese Weise steht die gesamte Länge der Mischkammer dazu zur Verfügung, die in die Mischkammer eingeleiteten Materialien innig miteinander zu vermischen.

CN 208 133 209 U offenbart einen 3D-Betondruckkopf für Zwei- oder Mehrkomponentenmaterialien nach dem Oberbegriff des Anspruchs 1.

Der Erfindung liegt die Aufgabe zugrunde, einen 3D-Betondruckkopf anzugeben, welcher eine innige Vermischung der zum Einsatz kommenden Materialien gewährleistet und kompakter baut als der aus der DE 10 2020 003 760 A1 bekannte 3D-Betondruckkopf.

Ausgehend von dem genannten Stand der Technik ist diese Aufgabe erfindungsgemäß durch einen 3D-Betondruckkopf mit den Merkmalen des Patentanspruchs 1 gelöst. Der erfindungsgemäße 3D-Betondruckkopf ist so ausgestaltet, dass das Beton- oder Mörtelgrundmaterial und der oder die zum Einsatz kommende(n) Zusatzstoff(e) bereits vor einem Eintritt in die Mischkammer miteinander in Kontakt gebracht und vermischt werden können. Um dies zu erreichen, mündet eine Zusatzstoffleitung, deren Endabschnitt in einer in die Mischkammer führenden Materialzufuhrleitung angeordnet ist, durch eine Zusatzstofföffnung in die vorgenannte Materialzufuhrleitung, wobei sich die Zusatzstofföffnung stromaufwärts einer Materialzufuhröffnung befindet, durch die die Materialzufuhrleitung in die Mischkammer einmündet. Die Zusatzstofföffnung ist also nicht wie beim genannten Stand der Technik in der Materialzufuhröffnung der Mischkammerumfangswand angeordnet, sondern ist in die Materialzufuhrleitung zurückversetzt und somit von der Gehäusewand der Mischkammer beabstandet. Der Abstand der Zusatzstofföffnung von der Gehäusewand bzw. der Materialzufuhröffnung sollte zumindest etwa so groß sein wie der Durchmesser der Materialzufuhröffnung, kann jedoch auch deutlich größer sein. Das im Verhältnis zur Mischkammer viel kleinere Volumen der Materialzufuhrleitung ermöglicht eine bessere und schnellere Vermischung des Zusatzstoffes oder der Zusatzstoffe mit dem Beton- oder Mörtelgrundmaterial bereits in der Materialzufuhrleitung und gestattet es deshalb, die Länge der Mischkammer gegenüber dem genannten Stand der Technik bei gleichem Durchmesser zu verkürzen. Dies führt im Sinne der zu lösenden Aufgabe zu einem kompakteren und auch leichteren 3D-Betondruckkopf, der trotz seines kompakteren Aufbaus eine bessere Vermischungsqualität zu liefern in der Lage ist.

Die Zusatzstoffleitung kann beispielsweise aus Metall oder aus Kunststoff bestehen. Vorzugsweise ist die Zusatzstoffleitung, insbesondere deren Endabschnitt, mit einer Auskleidung versehen, die Materialanhaftungen entgegenwirkt. Eine solche Auskleidung kann z.B. aus Polytetrafluorethylen (Teflon^{®}) bestehen. Wenn die gesamte Zusatzstoffleitung oder zumindest ihr Endabschnitt aus einem solchen reibungsmindernden Material besteht, erübrigt sich die Auskleidung der Zusatzstoffleitung bzw. des Endabschnitts. Ferner kann das Ende der Zusatzstoffleitung düsenartig ausgebildet oder mit einer Düse versehen sein, um die Einströmgeschwindigkeit des oder der Zusatzstoffe in die Materialzufuhrleitung zu erhöhen und dadurch eine noch bessere anfängliche Vermischung des oder der Zusatzstoffe mit dem bereits in der Materialzufuhrleitung strömenden Material zu erreichen.

Gemäß einer Ausführungsform des erfindungsgemäßen 3D-Betondruckkopfes kann die Zusatzstoffleitung zwei oder mehr Kanäle aufweisen, die über jeweils eine zugehörige Zusatzstofföffnung in die Materialzufuhrleitung münden. Auf diese Weise können mit einer einzigen Zusatzstoffleitung zwei oder mehr Zusatzstoffe in die Materialzufuhrleitung eingespeist werden. Unabhängig davon, ob die Zusatzstoffleitung nur einen einzigen oder mehrere Kanäle aufweist, ist der Endabschnitt der Zusatzstoffleitung vorzugsweise konzentrisch zur Materialzufuhrleitung angeordnet, d. h. der Querschnitt der Materialzufuhrleitung und der Querschnitt der Zusatzstoffleitung haben einen gemeinsamen Mittelpunkt.

Unabhängig davon, ob der Endabschnitt der Zusatzstoffleitung konzentrisch zur Materialzufuhrleitung angeordnet ist oder nicht, kann vorgesehen sein, dass der Endabschnitt der Zusatzstoffleitung axial verschiebbar gelagert ist, so dass der Abstand der Zusatzstofföffnung (oder der Zusatzstofföffnungen, wenn mehrere Kanäle in der Zusatzstoffleitung vorhanden sind) von der Gehäusewand der Mischkammer variiert werden kann. Auf diese Weise lässt sich die bis zum Eintritt in die Mischkammer zur Vermischung und Homogenisierung in der Materialzufuhrleitung zur Verfügung stehende Strecke verlängern oder verkürzen und somit an die Vermischungseigenschaften des oder der zum Einsatz kommenden Zusatzstoffe anpassen.

Um auch bei einer nur kurzen zur Vermischung und Homogenisierung in der Materialzufuhrleitung zur Verfügung stehenden Strecke die Vermischungsqualität zu erhöhen, ist bei manchen Ausführungsformen des erfindungsgemäßen 3D-Betondruckkopfes stromabwärts der Zusatzstofföffnung und stromaufwärts der Materialzufuhröffnung eine Strömungsquerschnittsverengung in der Materialzufuhrleitung vorhanden. Eine solche Strömungsquerschnittsverengung kann insbesondere die Gestalt einer Lavaldüse haben. Die Strömungsquerschnittsverengung führt zu einer lokal erhöhten Strömungsgeschwindigkeit in der Materialzufuhrleitung und dadurch zu einer intensiveren Vermischung des oder der Zusatzstoffe mit dem Beton- oder Mörtelgrundmaterial in der Materialzufuhrleitung. Alternativ oder zusätzlich kann stromabwärts der Zusatzstofföffnung und stromaufwärts der Materialzufuhröffnung ein statischer Mischer in der Materialzufuhrleitung vorhanden sein, der ebenfalls zu einer intensiveren Durchmischung von Zusatzstoff(en) und Beton- oder Mörtelgrundmaterial in der Materialzufuhrleitung führt.

Zuvor wurde bereits erläutert, dass eine Zusatzstoffleitung zwei oder mehr Kanäle aufweisen kann, damit mehrere Zusatzstoffe in die Materialzufuhrleitung eingespeist werden können. Alternativ oder zusätzlich können mehrere Zusatzstoffleitungen, deren Endabschnitt sich jeweils in der Materialzufuhrleitung befindet, so angeordnet werden, dass sie mit ihrer Zusatzstofföffnung in die Materialzufuhrleitung münden. Die mehreren Zusatzstoffleitungen können dabei in Strömungsrichtung der Materialzufuhrleitung gesehen an derselben Stelle in die Materialzufuhrleitung münden. Die Endabschnitte der mehreren Zusatzstoffleitungen können in der Materialzufuhrleitung axial angeordnet sein oder radial in die Materialzufuhrleitung hineinragen und in Umfangsrichtung der Materialzufuhrleitung zueinander versetzt angeordnet sein. Beispielsweise können die Endabschnitte der mehreren Zusatzstoffleitungen radial solchermaßen in die Materialzufuhrleitung hineinragen, dass sich ihre Zusatzstofföffnungen nahe dem Mittelpunkt der Materialzufuhrleitung befinden. Alle durch solche Zusatzstoffleitungen in die Materialzufuhrleitung eingespeisten Zusatzstoffe treffen dann im Kernbereich der durch die Materialzufuhrleitung verlaufenden Strömung aufeinander und werden dadurch bereits unmittelbar nach ihrer Einspeisung intensiv miteinander und mit dem in der Materialzufuhrleitung strömenden Beton- oder Mörtelgrundmaterial vermischt.

Alternativ können die Endabschnitte der mehreren Zusatzstoffleitungen tangential in die Materialzufuhrleitung hineinragen, wobei sie ebenfalls in Umfangsrichtung der Materialzufuhrleitung zueinander versetzt angeordnet sein können. Durch eine solche tangentiale Einspeisung von Zusatzstoff(en) in die Materialzufuhrleitung kann der in der Materialzufuhrleitung fließenden Strömung ein Drall aufgeprägt werden, der die Vermischung intensiviert und dadurch die Vermischungsqualität erhöht. Es sind auch Ausführungsformen möglich, bei denen manche Endabschnitte der mehreren Zusatzstoffleitungen radial in die Materialzufuhrleitung hineinragen und andere Endabschnitte der mehreren Zusatzstoffleitungen tangential in die Materialzufuhrleitung hineinragen.

Abhängig von den Eigenschaften der zum Einsatz gelangenden Zusatzstoffe kann es vorteilhaft sein, die Zusatzstoffe nicht oder nicht alle an der in Strömungsrichtung der Materialzufuhrleitung gesehen selben Stelle in die Materialzufuhrleitung einzuspeisen. Dies gilt beispielsweise dann, wenn bestimmte Zusatzstoffe nicht ohne weiteres miteinander verträglich sind und deshalb zunächst einzeln mit dem Beton- oder Grundmaterial vermischt werden müssen. Um dieses Ziel zu erreichen, zeichnen sich bestimmte Ausführungsformen des erfindungsgemäßen 3D-Betondruckkopfes dadurch aus, dass die Zusatzstofföffnungen der mehreren Zusatzstoffleitungen in Strömungsrichtung der Materialzufuhrleitung gesehen hintereinander angeordnet sind. Die Zusatzstofföffnungen der mehreren Zusatzleitungen sind also in der Materialzufuhrleitung axial voneinander beabstandet. Dabei können, wie bereits zuvor erläutert, die Endabschnitte der mehreren Zusatzstoffleitungen radial oder tangential in die Materialzufuhrleitung hineinragen und in Umfangsrichtung der Materialzufuhrleitung vorzugsweise zueinander versetzt angeordnet sein.

Bei anderen Ausführungsformen des erfindungsgemäßen 3D-Betondruckkopfes mit mehreren Zusatzstoffleitungen sind die Endabschnitte der mehreren Zusatzstoffleitungen in der Materialzufuhrleitung axial und hintereinander angeordnet. Dadurch wird ebenfalls erreicht, dass die Zusatzstofföffnungen der mehreren Zusatzstoffleitungen in der Materialzufuhrleitung axial voneinander beabstandet sind. Bei der letztgenannten Ausführungsform kann zwischen zwei in Strömungsrichtung der Materialzufuhrleitung aufeinanderfolgenden Zusatzstofföffnungen der mehreren Zusatzstoffleitungen ein statischer Mischer oder eine Strömungsquerschnittsverengung vorhanden sein, um den Vermischungs- und Homogenisierungsvorgang zu intensivieren und dadurch die Vermischungsqualität zu verbessern. Die Strömungsquerschnittsverengung kann wie bereits erläutert insbesondere die Gestalt einer Lavaldüse haben.

Die Ausführung des erfindungsgemäßen 3D-Betondruckkopfes kann aufgrund seiner vielen möglichen Varianten auf jeden Einsatzzweck und jede zu verarbeitende Materialkombination speziell abgestimmt werden. Darüber hinaus gewährleistet der erfindungsgemäße 3D-Betondruckkopf in jeder Ausführungsform eine hervorragende Vermischung und Homogenisierung des zum Einsatz gelangenden Materials und ist aufgrund seiner kompakten und leichteren Bauart sehr gut handhabbar, was insbesondere die an Handhabungsroboter zu stellenden Anforderungen verringert. Ausführungsformen des erfindungsgemäßen 3D-Betondruckkopfes werden im Folgenden anhand der beispielhaften, schematischen Zeichnungen näher erläutert. Es zeigt:
- Fig. 1: einen Teillängsschnitt durch eine erste Ausführungsform eines erfindungsgemäßen 3D-Betondruckkopfes,
- Fig. 1a: die Ansicht A-A aus Fig. 1 mit einer einen Kanal aufweisenden, konzentrisch in einer Materialzufuhrleitung angeordneten Zusatzstoffleitung,
- Fig. 1b: die Ansicht A-A aus Fig. 1 mit einer zwei Kanälen aufweisenden, konzentrisch in der Materialzufuhrleitung angeordneten Zusatzstoffleitung,
- Fig. 1c: die Ansicht A-A aus Fig. 1 mit drei in Umfangsrichtung versetzt angeordneten, radial in die Materialzufuhrleitung hineinragenden Zusatzstoffleitungen,
- Fig. 1d: die Ansicht A-A aus Fig. 1 mit zwei radial in die Materialzufuhrleitung hineinragenden und gegenüberliegenden Zusatzstoffleitungen,
- Fig. 1e: die Ansicht A-A aus Fig. 1 mit zwei gegenüberliegend angeordneten, tangential in die Materialzufuhrleitung hineinragenden Zusatzstoffleitungen,
- Fig. 2: eine Detailansicht einer Abwandlung der in Fig. 1 gezeigten Ausführungsform,
- Fig. 3: eine Detailansicht einer weiteren Abwandlung der in Fig. 1 gezeigten Ausführungsform,
- Fig. 4: einen Teillängsschnitt durch eine Ausführungsform mit einer Strömungsquerschnittsverengung in der Materialzufuhrleitung,
- Fig. 5: einen Teillängsschnitt einer Ausführungsform mit einem statischen Mischer in der Materialzufuhrleitung,
- Fig. 6: einen Teillängsschnitt einer Ausführungsform mit drei in der Materialzufuhrleitung axial hintereinander angeordneten Zusatzstoffleitungen, und
- Fig. 7: einen Teillängsschnitt einer Ausführungsform mit zwei in der Materialzufuhrleitung axial hintereinander angeordneten Zusatzstoffleitungen und einem dazwischen angeordneten statischen Mischer.

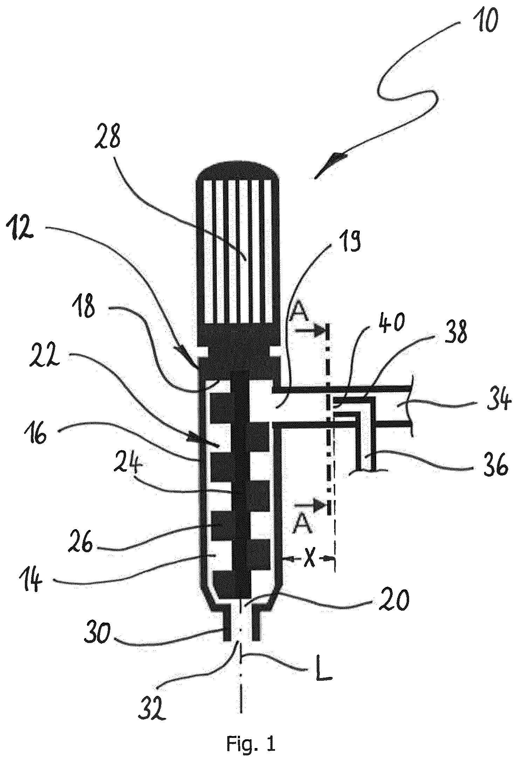

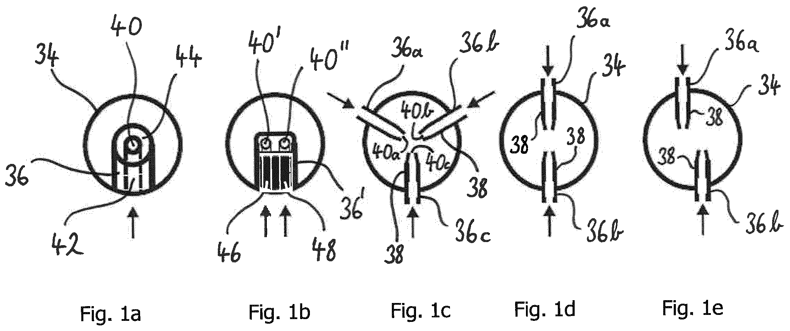

Fig. 1 zeigt eine erste Ausführungsform eines 3D-Betondruckkopfes 10 zum Ausbringen von Beton, Mörtel oder dergleichen in einer teilweise längsgeschnittenen Ansicht. Der 3D-Betondruckkopf 10 hat ein Gehäuse 12 mit einer darin angeordneten Mischkammer 14, die durch eine Gehäusewand 16 begrenzt ist. Die im Zusammenhang mit den beigefügten Figuren verwendeten Begriffe "oben", "oberhalb", "unten", "unterhalb" und "seitlich" sind nicht absolut zu verstehen, sondern beziehen sich lediglich auf die in den Figuren wiedergegebene Darstellung des 3D-Betondruckkopfes 10. Es versteht sich, dass ein 3D-Betondruckkopf 10 im Betrieb jede beliebige und erforderliche Orientierung einnehmen kann.

In den dargestellten Ausführungsformen hat die Mischkammer 14 eine kreiszylindrische Gestalt und kann daher auch als ein Mischrohr bezeichnet werden.

Die Mischkammer 14 erstreckt sich in axialer Richtung entlang einer Längsachse L von einem in den Figuren oberen Ende 18 der Mischkammer 14 bis zu einem unteren Ende, das von einer Mischkammeraustrittsöffnung 20 gebildet ist. Insbesondere erstreckt sich die Mischkammer 14 zwischen einer hier seitlich angeordneten Materialzufuhröffnung 19 und der Mischkammeraustrittsöffnung 20. Die Materialzufuhröffnung 19 dient zum Einbringen des Betons, Mörtels oder dergleichen in die Mischkammer 14. Zwar erfolgt bei allen hier dargestellten Ausführungsformen die Materialeinleitung in die Mischkammer 14 in einem Umfangsbereich der Gehäusewand 16, es ist jedoch ebenso möglich, die Materialeinleitung in einem stirnseitigen Bereich der Gehäusewand 16 anzuordnen, beispielsweise am oberen Ende 18 der Mischkammer 14 (nicht gezeigt). Gegebenenfalls muss das obere Ende 18 der Mischkammer 14 gegenüber den dargestellten Ausführungsformen etwas verbreitert ausgeführt werden, um am oberen Ende 18 der Mischkammer 14 genug Platz für eine Materialzufuhröffnung 19 zu schaffen.

In der Mischkammer 14 befindet sich eine aktiv antreibbare Mischeinrichtung, hier in Gestalt eines Mischwerks 22 mit einer sich axial durch die Mischkammer 14 erstreckenden Mischwelle 24, an der mehrere radial nach außen hervorstehende Mischflügel 26 angebracht sind. Ein Elektromotor 28 ist mit dem oberen Ende der Mischwelle 24 verbunden und dient dazu, die Mischwelle 24 und damit das gesamte Mischwerk 22 drehend anzutreiben, um die Mischwelle 24 um die Längsachse L rotieren zu lassen. Statt des hier gezeigten Elektromotors 28 kann die Mischwelle 24 auch auf andere Weise mechanisch, pneumatisch oder hydrodynamisch angetrieben sein. Ebenso ist das dargestellte Mischwerk 22 lediglich beispielhaft zu sehen. Statt des gezeigten Mischwerks 22 kann jedes andere Mischwerk bzw. jede andere Mischeinrichtung Verwendung finden, mit dem bzw. mit der eine in der Mischkammer 14 gewünschte Vermischung erzielbar ist.

Unterhalb der Mischkammer 14 ist ein Austragsbauteil 30 angeordnet, welches an seinem unteren, freien Ende eine Austragsöffnung 32 des 3D-Betondruckkopfes 10 bildet. In den hier dargestellten Ausführungsformen ist das Austragsbauteil 30 jeweils am Gehäuse 12 befestigt und kann einen sich in Strömungsrichtung konisch verengenden Strömungsquerschnitt haben. Wie dargestellt steht die Mischkammeraustrittsöffnung 20 der Mischkammer 14 in strömungsleitender Verbindung mit dem Austragsbauteil 30 und somit auch mit der Austragsöffnung 32, so dass im Betrieb des 3D-Betondruckkopfes 10 Material aus der Mischkammer 14 durch die Austragsöffnung 32 ausgebracht werden kann.

Um auszubringendes Material in die Mischkammer 14 einleiten zu können, ist die Materialzufuhröffnung 19 der Mischkammer 14 mit einer Materialzufuhrleitung 34 verbunden, die sich von der Materialzufuhröffnung 19 nach außen erstreckt und die beispielsweise als ein Zufuhrrohr und/oder ein Zufuhrschlauch ausgestaltet sein kann. Durch die Materialzufuhrleitung 34 werden die Hauptbestandteile eines von dem 3D-Betondruckkopf auszubringenden Materialgemisches der Mischkammer 14 zugeführt. Beispielsweise kann die Materialzufuhrleitung 34 unmittelbar mit einer Beton- oder Mörtelmischeinrichtung (nicht gezeigt) verbunden sein, wobei die Beton- oder Mörtelmischeinrichtung Beton oder Mörtel oder dergleichen herstellt und durch die Materialzufuhrleitung 34 in die Mischkammer 14 des 3D-Betondruckkopfes 10 drückt.

Zur erfolgreichen Anwendung eines 3D-Betondruckverfahrens ist es in der Regel notwendig, dem zu verarbeitenden Material, das durch die Materialzufuhrleitung 34 der Mischkammer 14 zugeführt wird, einen oder mehrere weitere Stoffe zuzusetzen, um die Eigenschaften des mit dem 3D-Betondruckkopf 10 auszubringenden Materialgemisches genau einzustellen. Diese weiteren Stoffe werden hier als Zusatzstoffe bezeichnet.

Zur Einbringung solcher weiteren Stoffe in das Material, das von dem 3D-Betondruckkopf 10 verarbeitet werden soll, dient mindestens eine Zusatzstoffleitung 36 mit einem in der Materialzufuhrleitung 34 angeordneten Endabschnitt 38. Der Endabschnitt 38 hat eine Zusatzstofföffnung 40, durch die die Zusatzstoffleitung 36 unmittelbar in die Materialzufuhrleitung 34 mündet. Damit ein durch eine solche Zusatzstoffleitung 36 zugeführter Zusatzstoff sich bereits vor dem Eintritt in die Mischkammer 14 mit dem durch die Materialzufuhrleitung 34 strömenden Material vermischen kann, ist die Zusatzstofföffnung 40 in Strömungsrichtung des durch die Materialzufuhrleitung 34 strömenden Materials gesehen vor der Materialzufuhröffnung 19 angeordnet. Mit anderen Worten befindet sich die Zusatzstofföffnung 40 stromaufwärts der Materialzufuhröffnung 19 in einem Abstand X von der Gehäusewand 16 der Mischkammer 14. Dieser Abstand X ist so bemessen, dass das durch die Materialzufuhrleitung 34 strömende Material (nunmehr einschließlich des Zusatzstoffes oder der Zusatzstoffe) auf dieser Strecke X bereits vor einem Eintritt in die Mischkammer 14 hinreichend durchmischt wird. Der Abstand X sollte zumindest ungefähr so groß sein wie der Durchmesser der Materialzufuhröffnung 19, jedoch kann der Abstand X auch ein Mehrfaches des Durchmessers der Materialzufuhröffnung 19 betragen, beispielsweise das Zweifache, Dreifache, Vierfache oder Fünffache des genannten Durchmessers. Auch noch größere Abstände X sind grundsätzlich möglich. In der Mischkammer 14 wird das durch die Materialzufuhröffnung 19 eintretende Materialgemisch dann weiter vermischt und homogenisiert.

In dem in Fig. 1 gezeigten Ausführungsbeispiel tritt die Zusatzstoffleitung 36 seitlich in die Materialzufuhrleitung 34 ein und ist dann so geführt, dass der Endabschnitt 38 der Zusatzstoffleitung 36 innerhalb der Materialzufuhrleitung 34 axial ausgerichtet ist, d. h. in Strömungsrichtung des in der Materialzufuhrleitung 34 strömenden Materials. Die Zusatzstoffleitung 36 kann jedoch auch anders als dargestellt in die Materialzufuhrleitung 34 hineingeführt werden, beispielsweise von hinten (nicht gezeigt).

Die Figuren 1a bis 1e zeigen jeweils die Ansicht A-A aus Fig. 1 für verschiedene Ausgestaltungen der Anordnung einer oder mehrerer Zusatzstoffleitungen 36 in der Materialzufuhrleitung 34. Fig. 1a entspricht im Wesentlichen der in Fig. 1 gezeigten Ausführungsform, bei der die Zusatzstoffleitung 36 nur einen einzigen Kanal 42 zur Zuführung eines Zusatzstoffes in die Materialzufuhrleitung 34 aufweist. Der Endabschnitt 38 der Zusatzstoffleitung 36 ist gemäß diesem Ausführungsbeispiel konzentrisch zum Querschnitt der Materialzufuhrleitung 34 angeordnet, d. h. eine die Zusatzstofföffnung 40 umfassende Stirnseite 44 des Endabschnitts 38 und der hier kreisförmige Querschnitt der Materialzufuhrleitung 34 haben denselben Mittelpunkt.

Der Endabschnitt 38 der Zusatzstoffleitung 36 muss jedoch nicht zwangsweise solchermaßen zentriert in der Materialzufuhrleitung 34 angeordnet sein, sondern kann in der Materialzufuhrleitung 34 auch exzentrisch angeordnet sein (nicht gezeigt). Auch braucht die Materialzufuhrleitung 34 keinen kreisförmigen Querschnitt zu haben.

Fig. 1b zeigt ein der Fig. 1a ähnliches Ausführungsbeispiel, jedoch hat die Zusatzstoffleitung 36' im Gegensatz zur Fig. 1a keinen kreisförmigen, sondern einen rechteckigen Querschnitt. Ferner enthält die Zusatzstoffleitung 36' zwei Kanäle 46, 48 mit jeweils einer Zusatzstofföffnung 40', 40", so dass gemäß dieser Ausführungsform zwei Zusatzstoffe in die Materialzufuhrleitung 34 eingeführt werden können. Der Endabschnitt 38 der Zusatzstoffleitung 36' ist analog Fig. 1 in der Materialzufuhrleitung 34 axial ausgerichtet und auf den Mittelpunkt des Querschnitts der Materialzufuhrleitung 34 zentriert. Wie zuvor zur Fig. 1a erläutert, ist auch hier eine exzentrische Anordnung möglich (nicht gezeigt).

Fig. 1c illustriert ein anderes Ausführungsbeispiel, bei dem drei Zusatzstoffleitungen 36a, 36b und 36c mit ihrem zugehörigen Endabschnitt 38 jeweils radial in die Materialzufuhrleitung 34 hineinragen. Die Zusatzstoffleitungen 36a, 36b, 36c sind in Umfangsrichtung der Materialzufuhrleitung 34 zueinander versetzt angeordnet, im gezeigten Ausführungsbeispiel um jeweils 120° zueinander versetzt, münden jedoch in Axialrichtung der Materialzufuhrleitung 34 gesehen alle an derselben Stelle in die Materialzufuhrleitung 34 ein. Gemäß Fig. 1c können drei verschiedene Zusatzstoffe in die Materialzufuhrleitung 34 in den Kern einer Strömung eingeleitet werden, die in der Materialzufuhrleitung 34 fließt, wobei sich diese drei Zusatzstoffe aufgrund des gegenseitigen Aufeinandertreffens nach ihrem Austritt aus der zugehörigen Zusatzstoffleitung 36a, 36b, 36c durch die Zusatzstofföffnung 40a, 40b bzw. 40c sofort miteinander vermischen. Gemäß einer abgewandelten, hier nicht dargestellten Ausführungsform sind die Zusatzstoffleitungen 36a, 36b, 36c in Axialrichtung der Materialzufuhrleitung 34 versetzt angeordnet und münden dann nicht mehr an ein und derselben Stelle in die Materialzufuhrleitung 34 ein. Ein Versatz der Zusatzstoffleitungen 36a, 36b, 36c in Umfangsrichtung der Materialzufuhrleitung 34 kann bei dieser abgewandelten Ausführungsform ebenfalls vorgesehen sein, kann jedoch auch entfallen.

Fig. 1d zeigt eine der Fig. 1c ähnliche Ausgestaltung mit nur zwei Zusatzstoffleitungen 36a, 36b, die gemäß diesem Ausführungsbeispiel einander gegenüberliegend angeordnet sind. Eine nicht gegenüberliegende Anordnung der Zusatzstoffleitungen 36a, 36b ist ebenfalls möglich (nicht gezeigt). Im Übrigen gelten die zur Fig. 1c gemachten Erläuterungen in analoger Weise, d. h. die beiden Zusatzstoffleitungen 36a, 36b können bezüglich der Axialrichtung der Materialzufuhrleitung 34 an derselben Stelle oder an axial voneinander beabstandeten Stellen in die Materialzufuhrleitung 34 einmünden.

Fig. 1e zeigt eine nochmals abgewandelte Ausführungsform, bei der die Endabschnitte 38 von zwei Zusatzstoffleitungen 36a, 36b tangential in die Materialzufuhrleitung 34 hineinragen und in Umfangsrichtung der Materialzufuhrleitung 34 zueinander versetzt angeordnet sind. Bei einer solchen tangentialen Anordnung der Endabschnitte 38 der Zusatzstoffleitungen 36a und 36b kommt es im Kern einer durch die Materialzufuhrleitung 34 fließenden Strömung nicht mehr zu einem unmittelbaren Aufeinanderprallen der eingeleiteten Zusatzstoffe. Vielmehr prägt eine solche hinsichtlich des Querschnitts der Materialzufuhrleitung 34 tangentiale Anordnung der Endabschnitte 38 der Strömung in der Materialzufuhrleitung 34 einen Drall auf, der eine gute Vermischung der eingeleiteten Zusatzstoffe untereinander und auch mit dem in der Materialzufuhrleitung 34 befindlichen Material fördert. Wie bereits zuvor erläutert, können auch hier die Endabschnitte 38 an der axial gesehen selben Stelle der Materialzufuhrleitung 34 angeordnet sein oder können axial voneinander beabstandet sein. Anstelle der in Fig. 1e gezeigten zwei Zusatzstoffleitungen 36a und 36b können auch mehrere Zusatzstoffleitungen mit einer solchen tangentialen Anordnung vorhanden sein, insbesondere dann, wenn die Einleitungsstellen in die Materialzufuhrleitung 34 axial voneinander beabstandet sind, und selbstverständlich kann auch nur eine einzige Zusatzstoffleitung mit tangentialer Anordnung vorhanden sein. Darüber hinaus können die in Fig. 1c bis Fig. 1e gezeigten Ausführungsformen miteinander kombiniert werden, d. h. es können manche Zusatzstoffleitungen an derselben axialen Stelle in die Materialzufuhrleitung 34 einmünden und andere Zusatzstoffleitungen können von dieser axialen Stelle und, falls gewünscht, auch voneinander axial beabstandet sein. Auch können manche Endabschnitte 38 der Zusatzstoffleitungen eine tangentiale Anordnung wie in Fig. 1e illustriert haben und andere Endabschnitte können radial angeordnet sein. Auch eine Kombination mit den in Fig. 1a und Fig. 1b gezeigten Ausführungsbeispielen ist möglich, d. h. es können beispielsweise ein oder auch zwei Zusatzstoffe durch die in Fig. 1a oder Fig. 1b gezeigten Anordnungen in die Materialzufuhrleitung 34 eingeleitet werden, während weitere Zusatzstoffe über Anordnungen zugeführt werden, wie sie in den Figuren 1c bis 1e illustriert sind.

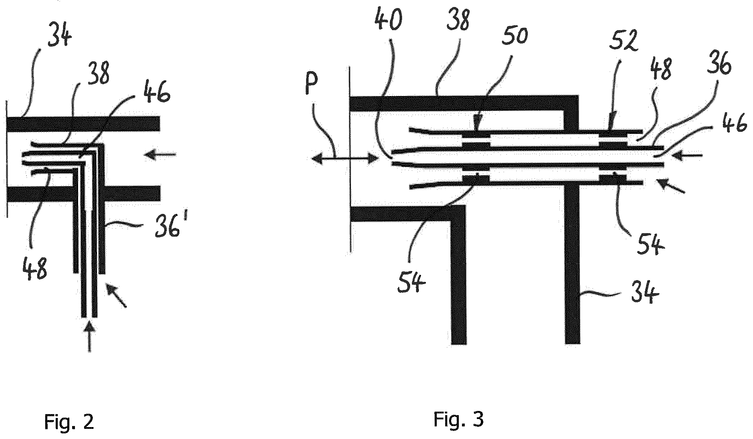

Fig. 2 zeigt eine weitere Ausgestaltung einer Zusatzstoffleitung 36', deren Anordnung grundsätzlich der in Fig. 1 gezeigten Anordnung entspricht. Wie die in Fig. 1b gezeigte Zusatzstoffleitung 36' weist auch die in Fig. 2 gezeigte Zusatzstoffleitung zwei Kanäle 46, 48 auf, jedoch sind bei der in Fig. 2 gezeigten Ausgestaltung diese Kanäle 46 und 48 konzentrisch zueinander angeordnet. Der Kanal 46 hat einen kreisförmigen Strömungsquerschnitt, wohingegen der Kanal 48 einen kreisringförmigen Strömungsquerschnitt aufweist.

Fig. 3 zeigt eine gegenüber Fig. 2 abgewandelte Ausführungsform, bei der der Endabschnitt 38 der Zusatzstoffleitung 36 axial verschiebbar gelagert ist. Wie durch den Pfeil P angedeutet, kann auf diese Weise der Abstand X der Zusatzstofföffnung 40 von der Gehäusewand 16 bzw. der Materialzufuhröffnung 19 verändert werden. Dadurch ist es möglich, den Abstand X zumindest in gewissen Grenzen an die Vermischungseigenschaft eines zugeführten Zusatzstoffes anzupassen und einem solchen Zusatzstoff beispielsweise eine längere Strecke X zur Vermischung mit dem in der Materialzufuhrleitung 34 strömenden Material zur Verfügung zu stellen. Wenn eine Lageranordnung 50, 52 wie in Fig. 3 dargestellt mit Durchströmungsöffnungen 54 versehen sind, dann kann der die Zusatzstoffleitung 36 konzentrisch umgebende Raum wie bei der Ausführungsform gemäß Fig. 2 zur Zuführung eines weiteren Zusatzstoffes in die Materialzufuhrleitung 34 genutzt werden.

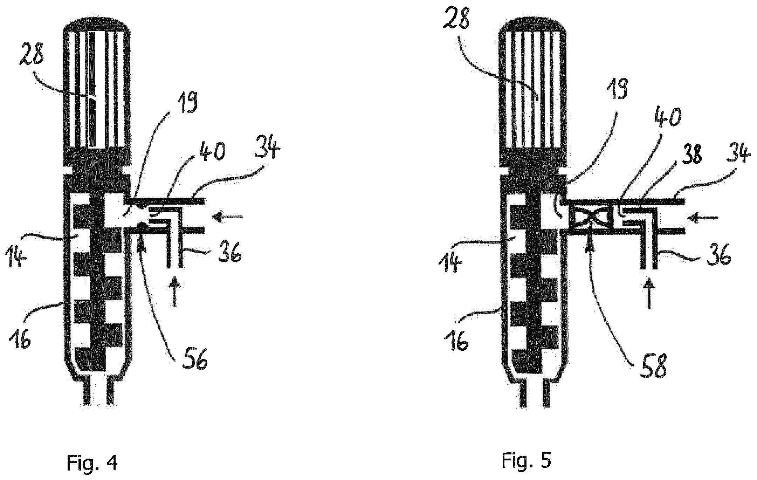

Fig. 4 zeigt eine Anordnung ähnlich der in Fig. 1 gezeigten Ausführungsform mit einer stromabwärts der Zusatzstofföffnung 40 und stromaufwärts der Materialzufuhröffnung 19 angeordneten Strömungsquerschnittsverengung in der Materialzufuhrleitung 34. Die Strömungsquerschnittsverengung hat im gezeigten Ausführungsbeispiel die Gestalt einer Lavaldüse 56. Jede Strömungsquerschnittsverengung, insbesondere aber eine Lavaldüse, führt zur Erhöhung der Strömungsgeschwindigkeit im Bereich der Strömungsquerschnittsverengung, wodurch eine Vermischung eines durch die Zusatzstoffleitung 36 zugeführten Zusatzstoffes mit dem in der Materialzufuhrleitung 34 strömenden Material intensiviert wird. Wenn die Lavaldüse 56 wie dargestellt nahe der Materialzufuhröffnung 19 angeordnet ist, dann wird durch eine solche Lavaldüse auch eine beschleunigte Einströmung des in der Materialzufuhrleitung 34 strömenden Materialgemisches in die Mischkammer 14 erreicht, was ebenfalls zu einer besseren Vermischung beiträgt.

Fig. 5 zeigt eine abgewandelte Ausführungsform, bei der statt der in Fig. 4 gezeigten Lavaldüse 56 ein statischer Mischer 58 stromabwärts der Zusatzstofföffnung 40 und stromaufwärts der Materialzufuhröffnung 19 in der Materialzufuhrleitung 34 angeordnet ist. Ein solcher statischer Mischer führt auf relativ kurzer Strecke zu einer innigen Vermischung des in die Materialzufuhrleitung 34 eingespeisten Zusatzstoffes mit dem bereits in der Materialzufuhrleitung 34 strömenden Material.

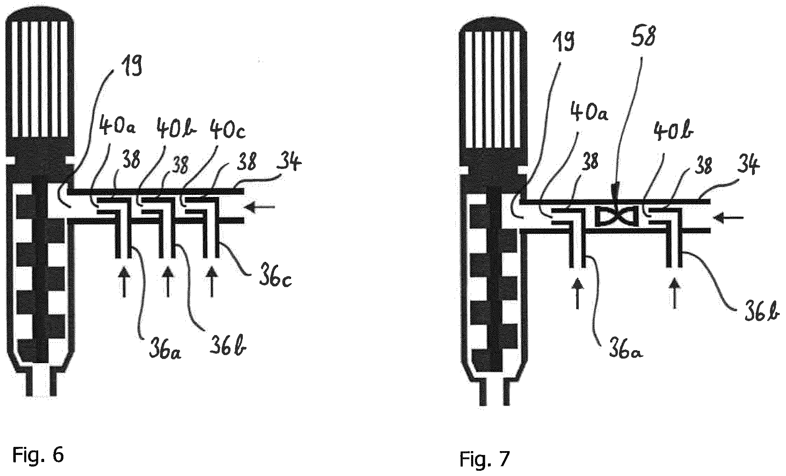

Fig. 6 zeigt eine Ausführungsform ähnlich Fig. 1, jedoch sind gemäß Fig. 6 drei Zusatzstoffleitungen 36a, 36b, 36c so angeordnet, dass ihre Endabschnitte 38 in der Materialzufuhrleitung 34 axial und hintereinander angeordnet sind. Mit anderen Worten, die Endabschnitte 38 folgen in Strömungsrichtung der Materialzufuhrleitung 34 gesehen in axialer Richtung aufeinander.

Fig. 7 schließlich zeigt eine der Fig. 6 ähnliche Ausführungsform mit nur zwei Zusatzstoffleitungen 36a und 36b, wobei zwischen den zwei in Strömungsrichtung der Materialzufuhrleitung 34 aufeinanderfolgenden Zusatzstofföffnungen 40b und 40a der Zusatzstoffleitungen 36b und 36a ein statischer Mischer 58 angeordnet ist, um eine innige Vermischung eines durch die Zusatzstoffleitung 36b eingeleiteten Zusatzstoffes mit dem in der Materialzufuhrleitung 34 strömenden Material zu bewirken. Ein solcher statischer Mischer oder alternativ eine Strömungsquerschnittsverengung kann selbstverständlich auch bei der in Fig. 6 dargestellten Ausführungsform zum Einsatz kommen, gegebenenfalls auch mehrfach, d. h. nach einer oder mehreren oder allen Zusatzstofföffnungen 40a, 40b und 40c.

## Patentansprüche

1. 3D-Betondruckkopf (10) für Zwei- oder Mehrkomponentenmaterialien, mit
- einem Gehäuse (12) und einer darin angeordneten, durch eine Gehäusewand (16) begrenzten Mischkammer (14),
- einer Materialzufuhrleitung (34) mit einer Materialzufuhröffnung (19), die in die Mischkammer (14) mündet,
- mindestens einer Zusatzstoffleitung (36) mit einem Endabschnitt (38),
- einer in der Mischkammer (14) angeordneten, aktiv antreibbaren Mischeinrichtung,
- einer Mischkammeraustrittsöffnung (20), wobei die Mischkammer (14) sich entlang einer Längsachse (L) zumindest zwischen der Materialzufuhröffnung (19) und der Mischkammeraustrittsöffnung (20) erstreckt, und
- einer Austragsöffnung (32), die mit der Mischkammeraustrittsöffnung (20) in strömungsleitender Verbindung steht, wobei
- die mindestens eine Zusatzstoffleitung (36) durch eine Zusatzstofföffnung (40) in die Materialzufuhrleitung (34) mündet, wobei die Zusatzstofföffnung (40) sich stromaufwärts der Materialzufuhröffnung (19) befindet und von der Gehäusewand (16) der Mischkammer (14) einen Abstand (X) aufweist,
**dadurch gekennzeichnet, dass** der Endabschnitt (38) der Zusatzstoffleitung (36) in der Materialzufuhrleitung (8) angeordnet ist.

2. 3D-Betondruckkopf nach Anspruch 1,
**dadurch gekennzeichnet, dass** die Zusatzstoffleitung (36') zwei oder mehr Kanäle (46, 48) umfasst, die über jeweils eine Zusatzstofföffnung (40', 40") in die Materialzufuhrleitung (34) münden.

3. 3D-Betondruckkopf nach Anspruch 1 oder 2,
**dadurch gekennzeichnet, dass** der Endabschnitt (38) der Zusatzstoffleitung (36, 36') konzentrisch zur Materialzufuhrleitung (34) angeordnet ist.

4. 3D-Betondruckkopf nach einem der vorhergehenden Ansprüche,
**dadurch gekennzeichnet, dass** der Endabschnitt (38) der Zusatzstoffleitung (36) axial verschiebbar gelagert ist, so dass der Abstand (X) der Zusatzstofföffnung (40) von der Gehäusewand (16) der Mischkammer (14) variabel ist.

5. 3D-Betondruckkopf nach einem der vorhergehenden Ansprüche,
**dadurch gekennzeichnet, dass** stromabwärts der Zusatzstofföffnung (40) und stromaufwärts der Materialzufuhröffnung (19) eine Strömungsquerschnittsverengung, insbesondere in Gestalt einer Lavaldüse (56), in der Materialzufuhrleitung (34) vorhanden ist.

6. 3D-Betondruckkopf nach einem der vorhergehenden Ansprüche,
**dadurch gekennzeichnet, dass** stromabwärts der Zusatzstofföffnung (40) und stromaufwärts der Materialzufuhröffnung (19) ein statischer Mischer (58) in der Materialzufuhrleitung (34) vorhanden ist.

7. 3D-Betondruckkopf nach einem der Ansprüche 1 bis 3,
**dadurch gekennzeichnet, dass** mehrere Zusatzstoffleitungen (36a, 36b, 36c), deren Endabschnitt (38) jeweils in der Materialzufuhrleitung (34) angeordnet ist, mit ihrer Zusatzstofföffnung (40a, 40b, 40c) in die Materialzufuhrleitung (34) münden.

8. 3D-Betondruckkopf nach Anspruch 7,
**dadurch gekennzeichnet, dass** die mehreren Zusatzstoffleitungen (36a, 36b, 36c) in Strömungsrichtung der Materialzufuhrleitung (34) gesehen an derselben Stelle in die Materialzufuhrleitung (34) münden.

9. 3D-Betondruckkopf nach Anspruch 8,
**dadurch gekennzeichnet, dass** die Endabschnitte (38) der mehreren Zusatzstoffleitungen (36a, 36b, 36c) radial in die Materialzufuhrleitung (34) hineinragen und in Umfangsrichtung der Materialzufuhrleitung (34) zueinander versetzt angeordnet sind.

10. 3D-Betondruckkopf nach Anspruch 8,
**dadurch gekennzeichnet, dass** die Endabschnitte (38) der mehreren Zusatzstoffleitungen (36a, 36b) tangential in die Materialzufuhrleitung (34) hineinragen und in Umfangsrichtung der Materialzufuhrleitung (34) zueinander versetzt angeordnet sind.

11. 3D-Betondruckkopf nach Anspruch 7,
**dadurch gekennzeichnet, dass** die Zusatzstofföffnungen (40a, 40b, 40c) der mehreren Zusatzstoffleitungen (36a, 36b, 36c) in Strömungsrichtung der Materialzufuhrleitung (34) gesehen hintereinander angeordnet sind.

12. 3D-Betondruckkopf nach Anspruch 11,
**dadurch gekennzeichnet, dass** die Endabschnitte (38) der mehreren Zusatzstoffleitungen (36a, 36b, 36c) radial oder tangential in die Materialzufuhrleitung (34) hineinragen und in Umfangsrichtung der Materialzufuhrleitung (34) vorzugsweise zueinander versetzt angeordnet sind.

13. 3D-Betondruckkopf nach Anspruch 7,
**dadurch gekennzeichnet, dass** die Endabschnitte (38) der mehreren Zusatzstoffleitungen (36a, 36b, 36c) in der Materialzufuhrleitung (34) axial und hintereinander angeordnet sind.

14. 3D-Betondruckkopf nach Anspruch 13,
**dadurch gekennzeichnet, dass** zwischen zwei in Strömungsrichtung der Materialzufuhrleitung (34) aufeinanderfolgenden Zusatzstofföffnungen (40a, 40b, 40c) der mehreren Zusatzstoffleitungen (36a, 36b, 36c) ein statischer Mischer (58) oder eine Strömungsquerschnittsverengung, insbesondere in Gestalt einer Lavaldüse (56), in der Materialzufuhrleitung (34) angeordnet ist.

## Claims

1. 3D concrete printhead (10) for two- or multi-component materials, having
- a housing (12), and a mixing chamber (14) arranged in the housing and delimited by a housing wall (16),
- a material supply line (34) having a material supply opening (19) which opens into the mixing chamber (14),
- at least one additive line (36) having an end portion (38),
- a mixing device which is arranged in the mixing chamber (14) and can be actively driven,
- a mixing chamber outlet opening (20), the mixing chamber (14) extending along a longitudinal axis (L) at least between the material supply opening (19) and the mixing chamber outlet opening (20), and
- a discharge opening (32) which is in fluidic communication with the mixing chamber outlet opening (20),
wherein
- the at least one additive line (36) opens into the material supply line (34) through an additive opening (40), the additive opening (40) being located upstream of the material supply opening (19) and being at a distance (X) from the housing wall (16) of the mixing chamber (14),
**characterised in that** the end portion (38) of the additive line (36) is arranged in the material supply line (34).

2. 3D concrete printhead according to claim 1,
**characterised in that** the additive line (36') comprises two or more channels (46, 48), each of which opens into the material supply line (34) via an additive opening (40', 40").

3. 3D concrete printhead according to claim 1 or 2,
**characterised in that** the end portion (38) of the additive line (36, 36') is arranged concentrically with the material supply line (34).

4. 3D concrete printhead according to any one of the preceding claims,
**characterised in that** the end portion (38) of the additive line (36) is mounted so as to be axially displaceable such that the distance (X) of the additive opening (40) from the housing wall (16) of the mixing chamber (14) is variable.

5. 3D concrete printhead according to any one of the preceding claims,
**characterised in that** there is a flow cross section constriction, in particular in the form of a Laval nozzle (56), in the material supply line (34) downstream of the additive opening (40) and upstream of the material supply opening (19).

6. 3D concrete printhead according to any one of the preceding claims,
**characterised in that** there is a static mixer (58) in the material supply line (34) downstream of the additive opening (40) and upstream of the material supply opening (19).

7. 3D concrete printhead according to any one of claims 1 to 3,
**characterised in that** multiple additive lines (36a, 36b, 36c), the end portions (38) of which are each arranged in the material supply line (34), open with their additive openings (40a, 40b, 40c) into the material supply line (34).

8. 3D concrete printhead according to claim 7,
**characterised in that** the multiple additive lines (36a, 36b, 36c), as seen in the flow direction of the material supply line (34), open into the material supply line (34) at the same point.

9. 3D concrete printhead according to claim 8,
**characterised in that** the end portions (38) of the multiple additive lines (36a, 36b, 36c) project radially into the material supply line (34) and are arranged offset with respect to one another in the circumferential direction of the material supply line (34).

10. 3D concrete printhead according to claim 8,
**characterised in that** the end portions (38) of the multiple additive lines (36a, 36b) project tangentially into the material supply line (34) and are arranged offset with respect to one another in the circumferential direction of the material supply line (34).

11. 3D concrete printhead according to claim 7,
**characterised in that** the additive openings (40a, 40b, 40c) of the multiple additive lines (36a, 36b, 36c) are arranged one behind the other as seen in the flow direction of the material supply line (34).

12. 3D concrete printhead according to claim 11,
**characterised in that** the end portions (38) of the multiple additive lines (36a, 36b, 36c) project radially or tangentially into the material supply line (34) and are preferably arranged offset with respect to one another in the circumferential direction of the material supply line (34).

13. 3D concrete printhead according to claim 7,
**characterised in that** the end portions (38) of the multiple additive lines (36a, 36b, 36c) are arranged in the material supply line (34) axially and one behind the other.

14. 3D concrete printhead according to claim 13,
**characterised in that** a static mixer (58) or a flow cross section constriction, in particular in the form of a Laval nozzle (56), is arranged in the material supply line (34) between two additive openings (40a, 40b, 40c) of the multiple additive lines (36a, 36b, 36c) that follow one another in the flow direction of the material supply line (34).

## Revendications

1. Tête d'impression 3D pour béton (10) pour des matériaux à au moins deux composants, comprenant
- un boîtier (12) et une chambre de mélange (14) disposée à l'intérieur de ce dernier et délimitée par une paroi de boîtier (16),
- une conduite d'alimentation en matériau (34) comportant un orifice d'alimentation en matériau (19) qui débouche dans la chambre de mélange (14),
- au moins une conduite d'additif (36) comportant une partie d'extrémité (38),
- un dispositif de mélange pouvant être entraîné activement, disposé dans la chambre de mélange (14),
- un orifice de sortie de la chambre de mélange (20), la chambre de mélange (14) s'étendant le long d'un axe longitudinal (L) au moins entre l'orifice d'alimentation en matière (19) et l'orifice de sortie de la chambre de mélange (20), et
- un orifice de distribution (32) qui est en communication fluidique avec l'orifice de sortie de la chambre de mélange (20),
dans lequel
- l'au moins une conduite d'additif (36) débouche dans la conduite d'alimentation en matériau (34) par un orifice d'ajout d'additif (40), l'orifice d'ajout d'additif (40) étant située en amont de l'orifice d'alimentation en matériau (19) et présentant un écart (X) par rapport à la paroi de boîtier (16) de la chambre de mélange (14),
**caractérisée en ce que** la partie d'extrémité (38) de la conduite d'additif (36) est disposée dans la conduite d'alimentation en matériau (34).

2. Tête d'impression 3D pour béton (10) selon la revendication 1
**caractérisée en ce que** la conduite d'additif (36') comprend au moins deux canaux (46, 48) qui débouchent chacun dans la conduite d'alimentation en matériau (34) par l'intermédiaire d'un orifice d'additif (40', 40").

3. Tête d'impression 3D pour béton (10) selon la revendication 1 ou 2
**caractérisée en ce que** la partie d'extrémité (38) de la conduite d'additif (36, 36') est disposée de manière concentrique par rapport à la conduite d'alimentation en matériau (34).

4. Tête d'impression 3D pour béton (10) selon l'une quelconque des revendications précédentes
**caractérisée en ce que** la partie d'extrémité (38) de la conduite d'additif (36) est montée axialement coulissant, de sorte que la distance (X) entre l'orifice d'ajout d'additif (40) et la paroi de boîtier (16) de la chambre de mélange (14) est variable.

5. Tête d'impression 3D pour béton (10) selon l'une quelconque des revendications précédentes
**caractérisée en ce qu'**en aval de l'orifice d'ajout d'additif (40) et en amont de l'orifice d'alimentation en matériau (19), un rétrécissement de la section d'écoulement, notamment sous la forme d'une tuyère de Laval (56), est disposé dans la conduite d'alimentation en matériau (34).

6. Tête d'impression 3D pour béton (10) selon l'une quelconque des revendications précédentes
**caractérisée en ce qu'**un mélangeur statique (58) est disposé dans la conduite d'alimentation en matériau (34), en aval de l'orifice d'ajout d'additif (40) et en amont de l'orifice d'alimentation en matériau (19).

7. Tête d'impression 3D pour béton (10) selon l'une quelconque des revendications 1 à 3
**caractérisée en ce que** une pluralité de conduites d'additif (36a, 36b, 36c), dont la partie d'extrémité (38) est chacune disposée dans la conduite d'alimentation en matériau (34), débouche par leur orifice d'ajout d'additif (40a, 40b, 40c) dans la conduite d'alimentation en matériau (34).

8. Tête d'impression 3D pour béton (10) selon la revendication 7
**caractérisé en ce que** la pluralité de conduites d'additif (36a, 36b, 36c) débouche dans la conduite d'alimentation en matériau (34) au même endroit, ans le sens d'écoulement de conduite d'alimentation en matériau (34).

9. Tête d'impression 3D pour béton (10) selon la revendication 8
**caractérisée en ce que** les parties d'extrémité (38) de la pluralité de conduites d'additif (36a, 36b, 36c) s'avancent radialement dans la conduite d'alimentation en matériau (34) et sont décalées les unes par rapport aux autres dans le sens circonférentiel de la conduite d'alimentation en matériau (34).

10. Tête d'impression 3D pour béton (10) selon la revendication 8
**caractérisée en ce que** les parties d'extrémité (38) des différentes conduites d'additif (36a, 36b) avancent tangentiellement dans la conduite d'alimentation en matériau (34) et sont décalées les unes par rapport aux autres dans le sens circonférentiel de la conduite d'alimentation en matériau (34).

11. Tête d'impression 3D pour béton (10) selon la revendication 7
**caractérisée en ce que** les orifices d'ajout d'additif (40a, 40b, 40c) des différentes conduites d'addition (36a, 36b, 36c) sont pratiqués les uns à la suite des autres dans le sens d'écoulement de la conduite d'alimentation en matériau (34).

12. Tête d'impression 3D pour béton (10) selon la revendication 11
**caractérisée en ce que** les parties d'extrémité (38) des différentes conduites d'additif (36a, 36b, 36c) s'avancent radialement ou tangentiellement dans la conduite d'alimentation en matériau (34) et sont décalées les unes par rapport aux autres dans le sens circonférentiel de la conduite d'alimentation en matériau (34).

13. Tête d'impression 3D pour béton (10) selon la revendication 7
**caractérisée en ce que** les parties d'extrémité (38) des différentes conduites d'additif (36a, 36b, 36c) sont disposées axialement et les unes derrière les autres dans la conduite d'alimentation en matériau (34).

14. Tête d'impression 3D pour béton (10) selon la revendication 13,
**caractérisée en ce qu'**entre deux orifices d'ajout d'additif (40a, 40b, 40c) de la pluralité des conduites d'additif (36a, 36b, 36c), un mélangeur statique (58) ou un rétrécissement de section d'écoulement, notamment sous la forme d'une tuyère de Laval (56), est disposé dans la conduite d'alimentation en matériau (34).
